# EUROPÄISCHE PATENTSCHRIFT

(11) **EP 1 977 190 B1**
(45) Veröffentlichungstag und Bekanntmachung des Hinweises auf die Patenterteilung: **16.08.2017**
(21) Anmeldenummer: 07703809.9
(22) Anmeldetag: 11.01.2007
(51) Int. Cl.: G01C 3/08, G01S 17/36, G01S 7/497

(54) **ENTFERNUNGSMESSGERÄT**
DISTANCE MEASURING DEVICE
APPAREIL DE MESURE DE DISTANCE

(30) Priorität: 13.01.2006 DE 102006001964
(43) Veröffentlichungstag der Anmeldung: 08.10.2008
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/EP2007/050267
(87) Internationale Veröffentlichungsnummer: WO 2007/082834

(56) Entgegenhaltungen:
- EP-A- 1 191 697
- EP-A2- 1 262 906
- US-A- 4 926 693

## Beschreibung

### Stand der Technik

Die Erfindung geht aus von einem Entfernungsmessgerät nach dem unabhängigen Anspruch 1. Es sind Messgeräte bekannt, die zur Messung einer Entfernung zu einem Messobjekt ein Messsignal mit einer Messfrequenz senden. Dieses Messsignal wird nach Reflexion auf dem Messobjekt vom Messgerät empfangen. Zur Auswertung einer Entfernungsinformation, die vom empfangenen Messsignal getragen wird, wird dieses mit einem Hilfssignal bearbeitet und in ein Auswertesignal umgewandelt. Das Hilfssignal weist eine Frequenz auf, die durch Abstimmung der Resonanzfrequenz eines Schwingkreises an die verwendete Messfrequenz angepasst werden kann.

Die EP 1 262 906 A2 offenbart ein Verfahren und eine Vorrichtung zur Bestimmung des Abstands zwischen einer Messvorrichtung, die einen Sender, einen Empfänger und einen Filterbaustein mit definierter Phasenkennlinie aufweist, und einem Objekt, bei dem vom Sender ein moduliertes Signal, insbesondere ein Lichtsignal, in Richtung des Objekts ausgesandt wird, das vom Objekt reflektierte Signal vom Empfänger empfangen wird, und das Ausgangssignal des Empfängers zumindest über den Filterbaustein dem Sender zugeführt wird, wobei wenigstens der Sender, der Empfänger und der Filterbaustein einen Schwingkreis bilden. Bei dem Verfahren der EP 1 262 906 A2 wird die Resonanzfrequenz des Schwingkreises gemessen und der Abstand aus der Resonanzfrequenz bestimmt. Dabei wird für wenigstens zwei verschiedene Phasenkennlinien die jeweilige Resonanzfrequenz des Schwingkreises ermittelt.

Die EP 1 262 906 A2 offenbart ein Entfernungsmessgerät mit einer Sendeschaltung, einem Sender, einem Empfänger, einer Empfangssctraltung, einem Bandpassfilter, einer Phasenkorrekturschaltung, einem Verstärker und einem Filterbaustein. Das von diesen Bauelementen gebildete System ist als rückgekoppeltes System ausgebildet, bei dem das Ausgangssignal des Filterbausteins auf die Sendeschaltung gegeben wird. Somit entspricht das System der EP 1 262 906 A2 einem Schwingkreis, dessen Resonanzfrequenz von der zu messenden Entfernung abhängt. Es wird bei diesem Verfahren die Resonanzfrequenz f₁ gemessen und mittels einer Kennlinie die, dieser Resonanzfrequenz f₁ entsprechende Phasenverschiebung bestimmt und daraus auf bekannte Weise die gesuchte Entfernung ermittelt. Der Schwingkreis wird über den Aufbau des Filterbausteins derart konzipiert, dass er mit zumindest zwei Resonanzfrequenzen f₁ und f₂ schwingt, die beide von der zu messenden Entfernung abhängen. Der Filterbaustein gibt hierzu zwei Phasenkennlinien vor, von welchen für jede gemessene Resonanzfrequenz f₁ bzw. f₂ die entsprechende Phasenverschiebung herleitbar ist.

Aus der EP 1 191 697 A2 ist ein insbesondere in einem opto-elektronischen Distanzmesssystem zu verwendender Lokaloszillator zur Erzeugung eine schmalbandigen HF-Signals zur direkten Signal mischung mit einem über eine Avalanche Fotodiode aus einem auf diese auftreffenden Lichtsignal erzeugten Empfangssignal bekannt. Die Erfindung sieht vor, die durch verschiedene Einflüsse und Exemplar-Streuungen veränderliche Sperrschichtkapazität der Avalanche-Fotodiode als die Oszillatorfrequenz (mit-) bestimmendes Element in einen steuerbaren HF Resonanzkreis einzubeziehen, dessen HF-Resonanzfrequenz bestimmt ist beispielsweise vom einstellbaren Teilerverhältnis einer durch einen phasenstarren Referenzoszillator beaufschlagten PLL-Schaltung, welche die Kapazität einer zur Sperrschichtkapazität parallel liegenden Kapazitätsdiode steuert.

Aus der US 4,926,693 ist ein berührungslos arbeitender Annäherungssensor bekannt, der ein Ultraschallinterferometer auf Basis eines piezoelektrischen Kristalls aufweist. Wird die Vorrichtung mit der Kristall-Resonanz-Frequenz betrieben, so ist die elektrische Impedanz des Kristalls abhängig von der akustischen Impedanz der Pfand Länge des Interferometers zum Zielobjekt. Durch Überwachung der Kristallimpedanz bei einer festen Frequenz, während die Zielobjekt Entfernung varüert wird, ermöglicht der Sensor der der US 4,926,693 die Bestimmung der inkrementalen Verschiebung des bewegten Zielobjektes. Durch Überwachung der Kristallimpedanz bei einer festen Zielobjekt-Position, während die Treiberfrequenz variiert wird, ermöglicht der Sensor der US 4,926,693 die Bestimmung der absoluten Nähe des Zielobjektes.

### Vorteile der Erfindung

Die Erfindung geht aus von einem Messgerät, insbesondere einem Entfernungsmessgerät, mit einer Sendeeinheit zum Senden eines Messsignals und einer Bearbeitungseinheit zum Bearbeiten des Messsignals, die einen Frequenzgang mit einem ersten Resonanzfrequenzbereich aufweist, in dem das Messsignal angeordnet ist.

Es wird vorgeschlagen, dass der Frequenzgang zumindest einen zweiten Resonanzfrequenzbereich aufweist, in dem das Messsignal bei einer Messung angeordnet ist. Hierdurch kann die Genauigkeit eines Messprozesses vorteilhaft gesteigert werden. Ist das Messgerät als Entfernungsmessgerät ausgebildet, können insbesondere eine hohe Auflösung sowie eine große Reichweite bei einer Entfernungsmessung erzielt werden. Ferner kann eine hohe Flexibilität bei einer Anwendung des Messgeräts erreicht werden. Beispielsweise kann das Messgerät als Ortungsgerät ausgebildet sein, wobei die Resonanzfrequenzbereiche zur Detektion verschiedener Stoffe in verschiedenen Frequenzbereichen genutzt werden können. Bei einer Messung wird das Messsignal vorzugsweise auf ein Messobjekt gesendet. Das vom Messobjekt reflektierte, eine Information des Messobjekts, z.B. eine Entfernungsinformation, tragende und vom Messgerät empfangene Messsignal wird vorteilhafterweise auf die Bearbeitungseinheit gegeben, die das Messsignal z.B. in ein Auswertesignal zum Auswerten der Information bearbeiten kann. Zur Bearbeitung des Messsignals wird zweckmäßigerweise zumindest eine schwingende Größe in der Bearbeitungseinheit verwendet. Diese schwingende Größe ist beispielsweise als oszillierende Spannung und/oder oszillierender Strom ausgebildet. Dabei dient der Frequenzgang vorzugsweise zur Charakterisierung eines Bearbeitungsvorgangs, der mittels der schwingenden Größe durchgeführt wird, als Funktion der Schwingungsfrequenz. Der Frequenzgang charakterisiert insbesondere eine Vorrichtung, insbesondere eine elektrische Vorrichtung, die zur Durchführung des Bearbeitungsvorgangs eingesetzt wird. In diesem Zusammenhang stellt der Frequenzgang vorzugsweise ein Verhältnis eines Ausgangssignals, das durch ein auf die Vorrichtung gegebenes Eingangssignal angeregt wird, zum Eingangssignal als Funktion der Frequenz dar. Die Vorrichtung kann zur Übertragung einer schwingenden Größe, z.B. einer oszillierenden Spannung, eines oszillierenden Stroms usw., dienen. Außerdem kann die Vorrichtung dazu dienen, eine schwingende Größe in eine weitere schwingende Größe umzuwandeln. Beispielsweise kann die Vorrichtung von einem oszillierenden Strom als Eingangssignal eine oszillierende Spannung als Ausgangssignal erzeugen. Der Frequenzgang entspricht insbesondere dem Frequenzspektrum eines von einem Dirac-Impuls, d.h. einem unendlich scharfen Impuls, angeregten Ausgangssignals. Unter einem "Resonanzfrequenzbereich" eines Frequenzgangs soll in diesem Zusammenhang insbesondere ein Bereich des Frequenzgangs verstanden werden, welcher sich um eine Resonanzfrequenz des Frequenzgangs erstreckt. Dabei kann die Breite dieses Frequenzbereichs z.B. mindestens 10%, vorteilhaft mindestens 20% und bevorzugt mindestens 30% der Resonanzfrequenz betragen.

Vorzugsweise ist die Bearbeitungseinheit zu einem abstimmungsfreien Betrieb vorgesehen. Dadurch kann eine Messzeit vorteilhaft reduziert werden. Mit Hilfe eines abstimmungsfreien Betriebs kann eine Messung durchgeführt werden, ohne dass ein Charakteristikum der Bearbeitungseinheit, z.B. ein Wert eines elektronischen Bauteils der Bearbeitungseinheit, an eine Bedingung der Messung angepasst werden muss.

Es wird außerdem vorgeschlagen, dass die Bearbeitungseinheit dazu vorgesehen ist, zur Erzeugung eines Auswertesignals das Messsignal mittels eines Hilfssignals zu bearbeiten. Es kann dadurch eine vom Messsignal getragene Messungsinformation mit hoher Flexibilität, z.B. durch Steuern des Hilfssignals, dem Messsignal für eine Auswertung entnommen werden. Vorteilhafterweise kann das Messsignal mit dem Hilfssignal in der Bearbeitungseinheit gemischt werden, wodurch ein für eine Auswertung geeignetes, z.B. in seiner Frequenz geeignetes Auswertesignal besonders einfach erzeugt werden kann.

In einer vorteilhaften Ausbildung der Erfindung wird vorgeschlagen, dass das Messgerät eine Empfangseinheit zum Empfangen des Messsignals aufweist, in der im Betrieb das Messsignal mit einem Hilfssignal gemischt wird. Dadurch kann ein besonders kompakter Aufbau der Bearbeitungseinheit erreicht werden.

Es wird ferner vorgeschlagen, dass die Bearbeitungseinheit eine Filtervorrichtung umfasst, die den Frequenzgang aufweist. Es können für eine Bearbeitung des Messsignals störende Frequenzen vorteilhaft unterdrückt werden, wodurch die Messungsqualität erhöht werden kann. Bei einer Bearbeitung eines eine schwingende Größe aufweisenden Signals kann die Größe in eine weitere schwingende Größe umgewandelt werden. Beispielsweise kann die Filtervorrichtung ein oszillierendes Stromsignal in ein oszillierendes Spannungssignal umwandeln.

Die Filtervorrichtung ist z.B. als Frequenzfilter ausgebildet. Außerdem kann die Filtervorrichtung als Anpassfilter ausgebildet sein, das zum Anpassen einer Signalleistung eines auf die Filtervorrichtung gegebenen Signals vorgesehen ist.

In diesem Zusammenhang wird vorgeschlagen, dass die Bearbeitungseinheit zum Bearbeiten des Messsignals mittels eines Hilfssignals vorgesehen ist und die Filtervorrichtung zum Filtern des Hilfssignals dient. Dadurch kann ein besonders effektiver Bearbeitungsprozess des Messsignals erreicht werden. Das Messsignal wird im Lauf eines Messvorgangs beispielsweise in mehreren Messfrequenzbereichen gesendet, die gezielt auf eine hohe Messgenauigkeit ausgewählt werden. Das Hilfssignal kann dabei an einen bevorzugten Messfrequenzbereich des Messsignals einfach angepasst werden, indem die Resonanzfrequenzbereiche des Frequenzgangs jeweils einem Messfrequenzbereich des Messsignals zugeordnet sind.

Umfasst die Filtervorrichtung eine Filterschaltung wenigstens dritter Ordnung, kann eine besonders effektive Unterdrückung von unerwünschten Frequenzen erzielt werden. Die Ordnung einer Filterschaltung beschreibt insbesondere die Abnahme des Amplitudenverhältnisses eines Ausgangssignals, das von einem auf die Filterschaltung gegebenen Eingangssignal angeregt wird, zum Eingangssignal oberhalb bzw. unterhalb von einer Grenzfrequenz, die einen Durchlassbereich der Filterschaltung charakterisiert. Ist n die Ordnung der Filterschaltung, so beträgt z.B. die Abnahme n 20dB pro Frequenzdekade. Ist die Filterschaltung höherer Ordnung, z.B. vierter, fünfter Ordnung usw., können ferner die Resonanzfrequenzbereiche des Frequenzgangs mit hoher Flexibilität erzeugt werden.

In einer weiteren Ausführungsform wird vorgeschlagen, dass das Messsignal als Bandsignal ausgebildet ist, wodurch eine hohe Informationsdichte und somit eine hohe Genauigkeit bei einer Bearbeitung, insbesondere bei einer Auswertung des Messsignals, erreicht werden können. Dabei kann das Messsignal gleichzeitig mehrere scharfe Messfrequenzen innerhalb eines Messfrequenzbereichs aufweisen. Ferner kann das Messsignal ein Kontinuum von Messfrequenzen aufweisen, das sich über einen Messfrequenzbereich erstreckt.

In diesem Zusammenhang wird vorgeschlagen, dass die Bearbeitungseinheit zum Bearbeiten des Messsignals mittels eines Hilfssignals vorgesehen ist, welches als Bandsignal ausgebildet ist. Es kann hierdurch eine an die Ausführungsform des Messsignals als Bandsignal vorteilhaft angepasste Bearbeitung, insbesondere eine optimierte Ausnutzung von Messungsinformationen des Messsignals, erreicht werden.

Des Weiteren wird vorgeschlagen, dass das Messgerät einen zumindest teilautomatischen Kalibriermodus aufweist, in welchem ein Messfrequenzbereich für das Messsignal an zumindest einen der Resonanzfrequenzbereiche angepasst wird, was eine vorteilhafte Steigerung der Messungsqualität bietet.

In diesem Zusammenhang wird vorgeschlagen, dass das Messgerät eine Kalibrierstrecke, über die das Messsignal als Kalibriersignal im Kalibriermodus auf die Bearbeitungseinheit gegeben wird, eine Messeinheit, welche zu einer Resonanzmessung der Resonanzfrequenzbereiche mittels des Kalibriersignals vorgesehen ist, und eine Steuereinheit aufweist, die abhängig von der Resonanzmessung zum Anpassen des Messfrequenzbereichs an zumindest einen der Resonanzfrequenzbereiche vorgesehen ist. Dadurch kann eine besonders einfache Ausführung eines Kalibrierprozesses im Kalibriermodus erreicht werden. Ferner kann eine bestehende Strecke, die z.B. zum Zweck einer Referenzmessung dient, vorteilhaft genutzt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein vor einem Messobjekt angeordnetes Laserentfernungsmessgerät mit einer Sendeeinheit zum Senden eines Messsignals und einer Bearbeitungseinheit zum Bearbeiten des reflektierten Messsignals,
- Fig. 2: eine Signalerzeugungseinheit, eine Filtervorrichtung und eine Empfangseinheit der Bearbeitungseinheit aus Figur 1,
- Fig. 3: einen Frequenzgang der Filtervorrichtung aus Figur 2 mit scharfen Messsignalen und
- Fig. 4: den Frequenzgang mit einem als Bandsignal ausgebildeten Messsignal.

### Beschreibung der Ausführungsbeispiele

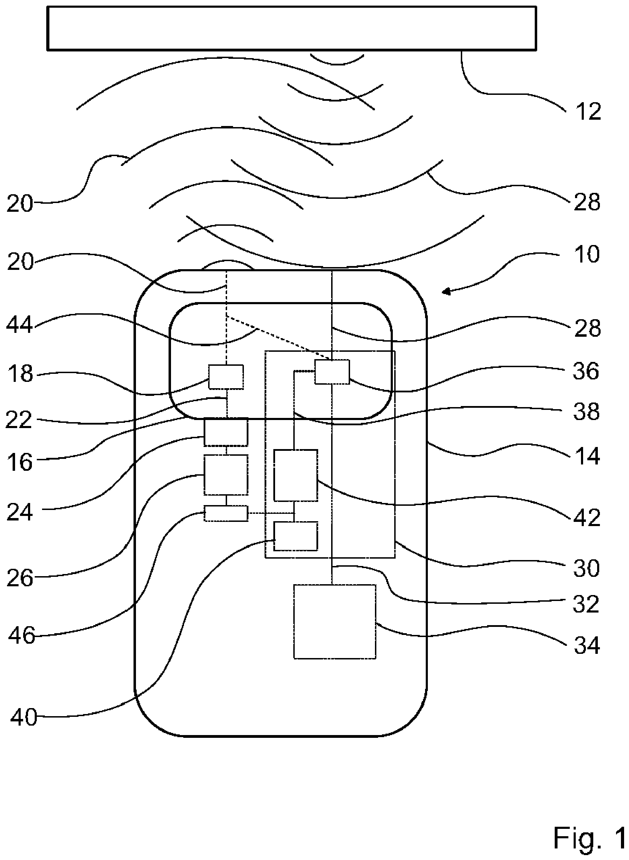

Figur 1 zeigt ein Laserentfernungsmessgerät 10, welches eine Messung der Entfernung zu einem Messobjekt 12 durchführt. Das Laserentfernungsmessgerät 10 weist ein Gehäuse 14, ein Display 16 und nicht gezeigte Betätigungselemente zum Ein- und Ausschalten eines Betriebs und zum Starten bzw. Konfigurieren eines Messvorgangs auf. Innerhalb des Gehäuses 14 ist eine Sendeeinheit 18 zur Erzeugung eines Sendesignals 20 angeordnet. Das Sendesignal 20 ist in diesem Beispiel als Lichtstrahl ausgebildet. Eine Ausführung des Sendesignals 20 als akustisches Signal, wie z.B. als Ultraschallsignal, ist ebenfalls denkbar. Die Sendeeinheit 18 ist in diesem Beispiel als Laserdiode ausgebildet. Beim Senden wird die Amplitude des Lichts im Sendesignal 20 durch ein Messsignal 22 moduliert. Das Messsignal 22, welches ein hochfrequentes Signal ist, wird von einer als Oszillator ausgebildeten Signalerzeugungseinheit 24 hergestellt und auf die Sendeinheit 18 zur Modulation des Lichts im Sendesignal 20 gegeben. Die Signalerzeugungseinheit 24 wird von einer Steuereinheit 26 gesteuert. Das von einer Oberfläche des Messobjekts 12 reflektierte Sendesignal 20 wird über eine nicht gezeigte Empfangsoptik vom Laserentfernungsmessgerät 10 als Empfangssignal 28 empfangen. Beim Empfangen des Empfangssignals 28 weist das Messsignal 22, das die Lichtamplitude des Empfangssignals 28 moduliert, eine Phasenverschiebung auf, die proportional zur Lichtlaufzeit zwischen dem Senden des Sendesignals 20 und dem Empfangen des Empfangssignals 28 ist. Diese Phasenverschiebung stellt eine Entfernungsinformation dar. Das Laserentfernungsmessgerät 10 weist eine Bearbeitungseinheit 30 auf, die zur Bearbeitung des Messsignals 22 in ein Auswertesignal 32 vorgesehen ist. Dieses dient zur Auswertung der Entfernungsinformation in die gewünschte Entfernung, welche in einer Auswerteeinheit 34 durchgeführt wird.

Die Bearbeitungseinheit 30 weist eine Empfangseinheit 36 zum Empfangen des Empfangssignals 28 auf, die z.B. als Fotodiode, insbesondere als APD (Avalanche Photodiode) ausgebildet ist. Beim Empfangen des Empfangssignals 28 erzeugt die Empfangseinheit 36 ein elektrisches Signal, das proportional zur Amplitude des empfangenen Lichts ist und somit das das Licht modulierende Messsignal 22 darstellt. Das Auswertesignal 32 wird durch eine Mischung des somit erfassten Messsignals 22 mit einem Hilfssignal 38 verschobener Frequenz erzeugt. Dabei ist die Frequenzdifferenz so gewählt, dass das Auswertesignal 32 ein niederfrequentes Signal ist, das für eine Auswertung der Entfernungsinformation geeignet ist. Das Mischen erfolgt durch Multiplikation des Messsignals 22 mit dem Hilfssignal 38 und findet vorzugsweise innerhalb der als Fotodiode ausgebildeten Empfangseinheit 36 statt. Die Bearbeitungseinheit 30 weist ferner eine Signalerzeugungseinheit 40 zur Erzeugung des Hilfssignals 38 und eine Filtervorrichtung 42 zum Filtern dieses Hilfssignals 38 auf. Das Laserentfernungsmessgerät 10 ist ferner mit einer Kalibrierstrecke 44 versehen, über welche zum Zweck einer Kalibrierung das von der Sendeeinheit 18 gesendete Sendesignal 20 auf die Empfangseinheit 36 direkt gegeben werden kann. Bei der Kalibrierung wird das Sendesignal 20 von einem vorzugsweise als antreibbare Klappe ausgebildeten Umlenkelement umgelenkt (nicht gezeigt), das durch die Steuereinheit 26 in den für das Sendesignal 20 vorgesehenen Pfad gefahren werden kann. Außerdem umfasst das Laserentfernungsmessgerät 10 eine Messeinheit 46, deren Funktion unten beschrieben wird.

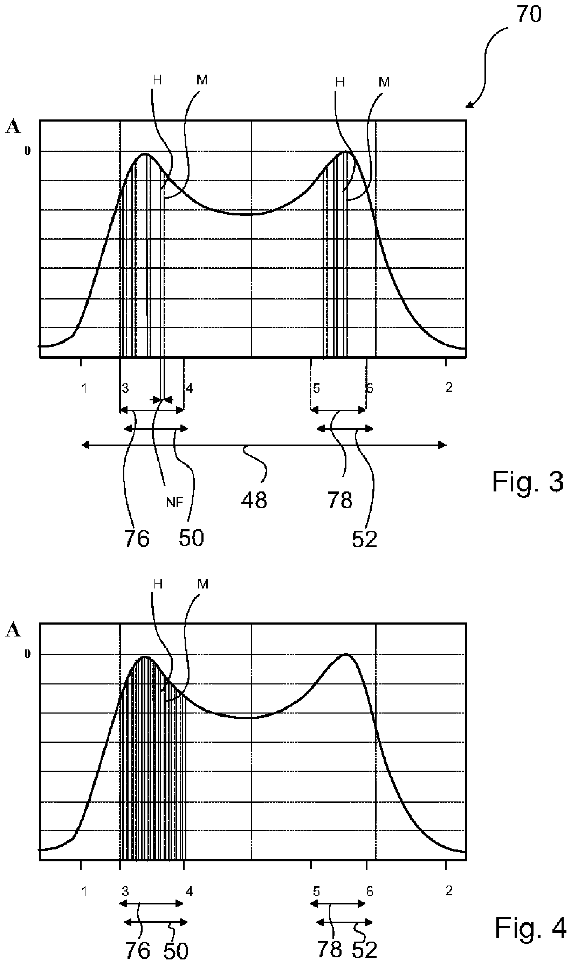

Um eine hohe Auflösung bei der Messung der gesuchten Entfernung zu erreichen, weist das Messsignal 22 eine hohe Messfrequenz ν_{M} auf (siehe Figur 3). Eine Periode (das Intervall von 0 bis 2 π) der Phasenverschiebung zwischen dem gesendeten und dem empfangenen Zustand des Messsignals 22 entspricht dadurch einem Eindeutigkeitsbereich, in dem die Entfernung eindeutig bestimmt werden kann und welcher einige Zentimeter beträgt. Um größere Eindeutigkeitsbereiche erreichen zu können, werden mehrere Messfrequenzen ν_{M} verwendet, die z.B. mit einer kleinen Frequenzdifferenz beieinander liegen. In der Praxis werden mehr als zwei verschiedene Messfrequenzen ν_{M} für das Messsignal 22 verwendet. In diesem Ausführungsbeispiel werden die Messfrequenzen ν_{M} in einem Frequenzbereich 48 von 750 MHz bis 1050 MHz ausgewählt (siehe Figur 3), was eine besonders vorteilhafte Genauigkeitssteigerung bei der Entfernungsmessung bietet. Innerhalb dieses Frequenzbereichs 48 werden die Messfrequenzen ν_{M} vorzugsweise in bevorzugten Messfrequenzbereichen, z.B. Messfrequenzbereichen 50, 52, gewählt, welche in Figur 3 dargestellt sind.

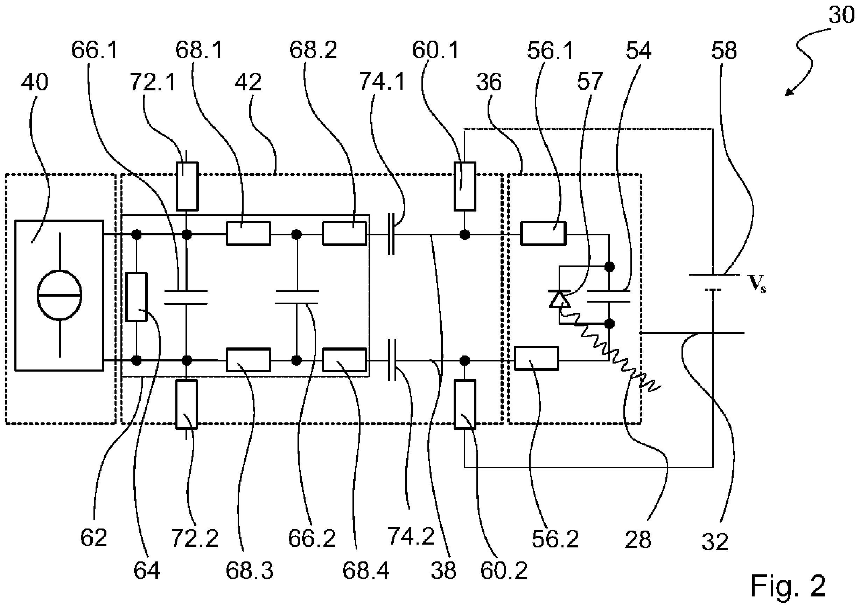

In Figur 2 ist die Anordnung der Signalerzeugungseinheit 40, der Filtervorrichtung 42 und der Empfangseinheit 36 in einer Detailansicht dargestellt. Die Empfangseinheit 36, die als APD-Fotodiode ausgebildet ist, weist eine intrinsische Kapazität sowie eine intrinsische Induktivität auf, die durch eine Kapazität 54 und Induktivitäten 56.1, 56.2 in der Figur schematisch dargestellt sind. Die gezeigte Fotodiode 57 soll somit als ideale Fotodiode betrachtet werden. Der Aufbau und das Funktionsprinzip einer APD-Fotodiode sind bekannt und sollen im Rahmen dieser Beschreibung nicht wiederholt werden. Im Betrieb wird eine hohe Gleichspannung Vₛ, die in diesem Beispiel 150 Volt beträgt, an der Sperrschicht der als APD-Fotodiode ausgebildeten Empfangseinheit 36 angelegt. Dies erfolgt über eine gestrichelt dargestellte Spannungsversorgung 58 und elektrische Widerstände 60.1, 60.2. Diese dienen zusätzlich zur Auskopplung des von der Empfangseinheit 36 empfangenen Messsignals 22 von der Spannungsversorgung 58. Die Gleichspannung Vₛ wird im Betrieb mit dem Hilfssignal 38 moduliert. Hierdurch wird das Hilfssignal 38 mit dem empfangenen Messsignal 22 gemischt, wodurch das niederfrequente Auswertesignal 32 erzeugt wird.

In diesem Ausführungsbeispiel ist die Signalerzeugungseinheit 40 als differentielle Stromquelle ausgebildet. Dementsprechend weist die gezeigte Filtervorrichtung 42 einen differentiellen Aufbau auf und das Hilfssignal 38 wird als differentielles Spannungssignal an der Sperrschicht der als APD-Fotodiode ausgebildeten Empfangseinheit 36 angelegt. In einer Ausführungsvariante ist ebenfalls denkbar, eine unipolare Signalerzeugungseinheit 40 und eine unipolare Filtervorrichtung 42 einzusetzen.

Die Filtervorrichtung 42 weist eine Filterschaltung 62 auf. Diese bildet mit einem Widerstand 64, mit Kapazitäten 66.1, 66.2 und Induktivitäten 68.1, 68.2, 68.3, 68.4 eine Filterschaltung fünfter Ordnung. Durch diese Filterschaltung 62 weist die Filtervorrichtung 42 einen Frequenzgang 70 auf, der in Figur 3 dargestellt ist. Zur Bestimmung der geeigneten Werte der Bauteile der Filterschaltung 62 werden die intrinsische Kapazität 54 sowie die intrinsischen Induktivitäten 56.1, 56.2 der als APD-Diode ausgebildeten Empfangseinheit 36 durch eine Messung bestimmt und berücksichtigt. In der Filtervorrichtung 42 sind ferner Induktivitäten 72.1, 72.2 und Kapazitäten 74.1, 74.2 geschaltet. Die Kapazitäten 74.1, 74.2 dienen zur Entkopplung der Filterschaltung 62 von der Spannungsversorgung 58. Die Induktivitäten 72.1, 72.2 dienen dazu, den Arbeitspunkt der als differentielle Stromquelle ausgebildeten Signalerzeugungseinheit 40 einzustellen. Diese Stromquelle ist in diesem Beispiel als Transistor ausgebildet, bei dem eine Spannung am Kollektor angelegt wird. Die Induktivitäten 72.1, 72.2 dienen dazu, diese Spannung innerhalb eines bestimmten Arbeitsintervalls, z.B. zwischen 1,5 V und 4,5 V, aufrechtzuerhalten, und zwar unabhängig von der zugeschalteten Filterschaltung 62. Die Induktivitäten 72.1, 72.2 und die Kapazitäten 74.1, 74.2 sind so gewählt, dass sie keinen Einfluss auf den in Figur 3 gezeigten Frequenzgang 70 haben. Die gezeigte Filterschaltung 62 ist als passive Filterschaltung ausgebildet. In einer Ausführungsvariante ist denkbar, eine aktive Filterschaltung einzusetzen. Dies ist besonders vorteilhaft, wenn Frequenzen für das Hilfssignal 38 bis z.B. 100 MHz eingesetzt werden.

In Figur 3 ist der Frequenzgang 70 der in Figur 2 dargestellten Filterschaltung 62 gezeigt. Es wird das Amplitudenverhältnis A eines Ausgangssignals, das von einem am Eingang der Filterschaltung 62 gegebenen Eingangssignal angeregt wird, zum Eingangssignal in dB (Dezibel) als Funktion der Frequenz ν in MHz (Megahertz) dargestellt. Die Linie "0" entspricht einer Übertragung des Eingangssignals ohne Dämpfung. Die Filterschaltung weist eine untere Grenzfrequenz ν₁ = 750 MHz und eine obere Grenzfrequenz ν₂ = 1050 MHz auf. Der durch diese Grenzen begrenzte Frequenzbereich entspricht dem Frequenzbereich 48, in dem die Messfrequenzen ν_{M} gewählt werden. Unterhalb der unteren Grenzfrequenz ν₁ bzw. oberhalb der oberen Grenzfrequenz ν₂ wird ein Signal durch die Filterschaltung 62 unterdrückt. Der Frequenzgang 70 weist ferner zwei Resonanzfrequenzbereiche 76, 78 auf, die von den Frequenzintervallen von ν₃ = 800 MHz bis ν₄ = 840 MHz und ν₅ = 940 MHz bis ν₆ = 990 MHz gebildet sind. Der Frequenzgang 70 entspricht dem von einem Dirac-Puls als Eingangssignal angeregten Ausgangssignal. In der Praxis kann der Frequenzgang 70 durch Abtasten des Frequenzbereichs 48 zwischen ν₁ und ν₂ gemessen werden, indem ein frequenzscharfes Signal zunehmender Frequenz, z.B. mit einem Schritt von 1 MHz, auf die Filterschaltung 62 gegeben wird und das entsprechende Ausgangssignal erfasst wird. Die in Figur 2 gezeigte Filtervorrichtung 42 kann durch eine geeignete Wahl der Werte ihrer elektronischen Bauteile oder durch eine weitere Schaltungsweise einen verschiedenen Frequenzgang 70 aufweisen, der z.B. mehr als zwei Resonanzfrequenzbereiche aufweist.

Bei einer Messung einer Entfernung wird das Sendesignal 20 mit dem Messsignal 22 moduliert, welches eine Messfrequenz ν_{M} aufweist. Das von der Empfangseinheit 36 empfangene Messsignal 22 wird mit dem von der Filtervorrichtung 42 gefilterten Hilfssignal 38 gemischt, welches eine Mischfrequenz ν_{H} = ν_{M}-ν_{NF} aufweist, wobei ν_{NF} eine kleine Frequenz ist und die gewünschte Auswertefrequenz des Auswertesignals 32 darstellt. Die verwendeten Messfrequenzen ν_{M} werden vorzugsweise in den Messfrequenzbereichen 50, 52 gewählt. Diese entsprechen jeweils zumindest teilweise einem der Resonanzfrequenzbereiche 76 bzw. 78 der Filterschaltung 62, wodurch ein hoher Mischgewinn erzielt werden kann. Die Resonanzfrequenzbereiche 76, 78 sind selbst durch den geeigneten Aufbau der Filterschaltung 62 in Bereichen der Frequenzskala angeordnet, in welchen die Messfrequenzen ν_{M} zur Optimierung der Messgenauigkeit und der Reichweite der Entfernungsmessung gewählt werden sollen. Ferner steigt die Messungsgenauigkeit mit der Anzahl der verwendeten Messfrequenzen ν_{M}. In der Figur sind als Beispiel vier Werte der Messfrequenz ν_{M} gestrichelt dargestellt. Jedem Wert der Messfrequenz ν_{M} ist die entsprechende Mischfrequenz ν_{H} zugeordnet, welche um die Auswertefrequenz ν_{NF} verschoben ist. Bei der Messung kann die Messfrequenz ν_{M} sowohl im Messfrequenzbereich 50 als auch im Messfrequenzbereich 52 gewählt werden. Gegenüber einer Ausbildung der Filtervorrichtung 42 mit einer herkömmlichen Filterschaltung zweiter Ordnung, welche einen Frequenzgang mit nur einem Resonanzfrequenzbereich aufweist, kann die Messfrequenz ν_{M} in beiden Messfrequenzbereichen 50, 52 gewählt werden, ohne dass die Filterschaltung 62 zum Zweck der Mischung des Messsignals 22 mit dem Hilfssignal 38 abgestimmt werden muss. Die in Figur 2 gezeigte Filterschaltung 62 stellt durch geeignete Wahl ihrer elektronischen Bauteile beide Resonanzfrequenzbereiche 76, 78 jederzeit zur Verfügung, und es kann auf eine Abstimmung eines Werts von einem oder mehreren Bauteilen der Filterschaltung 62 zur Anpassung des Hilfssignals 38 an eine verwendete Messfrequenz ν_{M} des Messsignals 22 verzichtet werden.

In Figur 4 ist der Frequenzgang 70 der in Figur 2 dargestellten Filterschaltung 62 nochmals gezeigt. Anhand der Figur wird ein weiteres Ausführungsbeispiel erläutert, in dem das Messsignal 22 als Bandsignal ausgeführt ist. Das Messsignal 22 weist gleichzeitig mehrere Messfrequenzen ν_{M} auf, die innerhalb des Messfrequenzbereiches 50 angeordnet sind. Es kann ebenfalls im Messfrequenzbereich 52 angeordnet sein. Das Messsignal 22 kann außerdem ein Kontinuum von Messfrequenzen ν_{M} aufweisen, welches sich über jeweils den Messfrequenzbereich 50 bzw. 52 erstreckt. Das Messsignal 22 wird mit dem Hilfssignal 38 gemischt, welches ebenfalls als Bandsignal ausgebildet ist. Hierzu ist die Signalerzeugungseinheit 40 zur Erzeugung des Hilfssignals 38 in einem Frequenzband vorgesehen, welches in diesem Beispiel vom Resonanzfrequenzbereich 76 bzw. 78 gebildet ist.

Ferner ist das Laserentfernungsmessgerät 10 mit einem Kalibriermodus versehen. In diesem Kalibriermodus wird das von der Sendeeinheit 18 erzeugte Sendesignal 20, welches mit dem Messsignal 22 moduliert wird, über die Kalibrierstrecke 44 auf die Empfangseinheit 36 der Bearbeitungseinheit 30 gegeben. Dabei dient das Messsignal 22 als Kalibriersignal, welches eine Kalibrierfrequenz aufweist. Im Lauf des Kalibriermodus wird diese Kalibrierfrequenz zwischen der Grenzfrequenz ν₁ und der Grenzfrequenz ν₂ (siehe Figur 2) schrittweise, z.B. mit einem Schritt von 1 MHz, von der Steuereinheit 26 variiert. Dabei wird das von der Empfangseinheit 36 empfangene und über die Filterschaltung 62 übertragene Kalibriersignal von der Messeinheit 46 registriert, welche somit eine Resonanzmessung durchführt, durch welche die Resonanzfrequenzbereiche 76, 78 der Filterschaltung 62 gemessen werden. Anhand dieser Resonanzmessung kann die Steuereinheit 26 die Messfrequenzbereiche 50, 52 für das Messsignal 22 an die Resonanzfrequenzbereiche 76, 78 der Filterschaltung 62 mit hoher Genauigkeit anpassen, wodurch ein besonders effektives Mischverfahren bei der Messung erreicht werden kann. Der Kalibriermodus kann vollautomatisch, z.B. bei einem Einschalten des Laserentfernungsmessgeräts 10, durchgeführt werden. Alternativ kann er durch einen Bediener eingeschaltet werden.

## Patentansprüche

1. Entfernungsmessgerät mit einer Sendeeinheit (18) zum Senden eines Messsignals (22) mit mehreren Messfrequenzen, die aus mehreren Messfrequenzbereichen gewählt sind, zu einem Messobjekt (12). und einer Bearbeitungseinheit (30) zum Bearbeiten des vom Messobjekt (12) reflektierten Messsignals (22), wobei die Bearbeitungseinheit (30) derart eingerichtet ist, dass ein Auswertesignal (32) aus einer Mischung des Messsignals (22) mit einem Hilfssignal (38) erzeugt wird, wobei die Bearbeitungseinheit (30) eine Filtervorrichtung (42) umfasst, die einen Frequenzgang (70) mit einem ersten und einem zweiten Resonanzfrequenzbereich (76, 78) aufweist, und wobei der erste und der zweite Resonanzfrequenzbereich des Frequenzgangs jeweils einem Messfrequenzbereich des Messsignals (22) bei einer Messung zugeordnet ist.

2. Entfernungsmessgerätnach Anspruch 1, **dadurch gekennzeichnet, dass** die Bearbeitungseinheit (30) zu einem abstimmungsfreien Betrieb vorgesehen ist, wobei eine Filterschaltung der Filtervorrichtung auf Grund des Frequenzganges mit einem ersten und einem zweiten Resonanzfrequenzbereich unabhängig von einer Abstimmung mit dem Hilfssignal ist.

3. Entfernungsmessgerätnach Anspruch 1 oder 2, **dadurch gekennzeichnet, dass** die Bearbeitungseinheit (30) dazu vorgesehen ist, zur Erzeugung eines Auswertesignals (32) das Messsignal (22) mittels eines Hilfssignals (38) zu bearbeiten.

4. Entfernungsmessgerätnach einem der vorhergehenden Ansprüche, **dadurch gekennzeichnet, dass die** Bearbeitungseinheit (30) eine Filtervorrichtung (42) umfasst, die den Frequenzgang (70) aufweist.

5. Entfernungsmessgerätnach Anspruch 4, **dadurch gekennzeichnet, dass** die Bearbeitungseinheit (30) zum Bearbeiten des Messsignals (22) mittels eines Hilfssignals (38) vorgesehen ist und die Filtervorrichtung (42) zum Filtern des Hilfssignals (38) dient.

6. Entfernungsmessgerätnach Anspruch 4 oder 5, **dadurch gekennzeichnet, dass** die Filtervorrichtung (42) eine Filterschaltung (62) wenigstens dritter Ordnung umfasst.

7. Entfernungsmessgerätnach einem der vorhergehenden Ansprüche, **dadurch gekennzeichnet, dass** das Messsignal (22) als Bandsignal ausgebildet ist.

8. Entfernungsmessgerätnach Anspruch 7, **dadurch gekennzeichnet, dass** die Bearbeitungseinheit (30) zum Bearbeiten des Messsignals (22) mittels eines Hilfssignals (38) vorgesehen ist, welches als Bandsignal ausgebildet ist.

9. Entfernungsmessgerätnach einem der vorhergehenden Ansprüche, **gekennzeichnet durch** einen zumindest teilautomatischen Kalibriermodus, in welchem ein Messfrequenzbereich (50, 52) für das Messsignal (22) an zumindest einen der Resonanzfrequenzbereiche (76, 78) angepasst wird.

10. Entfernungsmessgerätnach Anspruch 9, **gekennzeichnet durch** eine Kalibrierstrecke (44), über die das Messsignal (22) als Kalibriersignal im Kalibriermodus auf die Bearbeitungseinheit (30) gegeben wird, eine Messeinheit (46), welche zu einer Resonanzmessung der Resonanzfrequenzbereiche (76, 78) mittels des Kalibriersignals vorgesehen ist, und eine Steuereinheit (26), die abhängig von der Resonanzmessung zum Anpassen des Messfrequenzbereichs (50, 52) an zumindest einen der Resonanzfrequenzbereiche (76, 78) vorgesehen ist.

## Claims

1. Distance measuring apparatus comprising a transmitting unit (18) for transmitting a measurement signal (22) with a plurality of measurement frequencies selected from a plurality of measurement frequency ranges to a measurement object (12), and a processing unit (30) for processing the measurement signal (22) reflected by the measurement object (12), wherein the processing unit (30) is configured in such a way that an evaluation signal (32) is generated from a mixture of the measurement signal (22) with an auxiliary signal (38), wherein the processing unit (30) comprises a filter device (42) having a frequency response (70) with a first and a second resonant frequency range (76, 78), and wherein the first and the second resonant frequency ranges of the frequency response are assigned respectively to a measurement frequency range of the measurement signal (22) in the case of a measurement.

2. Distance measuring apparatus according to Claim 1, **characterized in that** the processing unit (30) is provided for tuning-free operation, wherein a filter circuit of the filter device is independent of a tuning with the auxiliary signal on account of the frequency response with a first and a second resonant frequency range.

3. Distance measuring apparatus according to Claim 1 or 2, **characterized in that** the processing unit (30) is provided for processing the measurement signal (22) by means of an auxiliary signal (38) in order to generate an evaluation signal (32).

4. Distance measuring apparatus according to any of the preceding claims, **characterized in that** the processing unit (30) comprises a filter device (42) having the frequency response (70).

5. Distance measuring apparatus according to Claim 4, **characterized in that** the processing unit (30) is provided for processing the measurement signal (22) by means of an auxiliary signal (38), and the filter device (42) serves for filtering the auxiliary signal (38).

6. Distance measuring apparatus according to Claim 4 or 5, **characterized in that** the filter device (42) comprises an at least third-order filter circuit (62).

7. Distance measuring apparatus according to any of the preceding claims, **characterized in that** the measurement signal (22) is embodied as a band signal.

8. Distance measuring apparatus according to Claim 7, **characterized in that** the processing unit (30) is provided for processing the measurement signal (22) by means of an auxiliary signal (38) embodied as a band signal.

9. Distance measuring apparatus according to any of the preceding claims, **characterized by** an at least partly automatic calibration mode in which a measurement frequency range (50, 52) for the measurement signal (22) is adapted to at least one of the resonant frequency ranges (76, 78).

10. Distance measuring apparatus according to Claim 9, **characterized by** a calibration section (44), via which the measurement signal (22) is passed as calibration signal in the calibration mode to the processing unit (30), a measuring unit (46) provided for a resonance measurement of the resonant frequency ranges (76, 78) by means of the calibration signal, and a control unit (26) provided for adapting the measurement frequency range (50, 52) to at least one of the resonant frequency ranges (76, 78) depending on the resonance measurement.

## Revendications

1. Appareil de mesure de distance comportant une unité d'émission (18) pour émettre un signal de mesure (22) ayant plusieurs fréquences de mesure qui sont sélectionnées dans plusieurs plages de fréquences de mesure, vers un objet de mesure (12), et une unité de traitement (30) pour traiter le signal de mesure (22) réfléchi par l'objet de mesure (12), dans lequel l'unité de traitement (30) est conçue de manière à générer un signal d'évaluation (32) à partir d'un mélange du signal de mesure (22) et d'un signal auxiliaire (38), dans lequel l'unité de traitement (30) comprend un dispositif de filtrage (42) qui présente une réponse en fréquence (70) ayant des première et seconde plages de fréquences de résonance (76, 78), et dans lequel les première et seconde plages de fréquences de résonance de la réponse en fréquence sont respectivement associées, lors d'une mesure, à une plage de fréquences de mesure du signal de mesure (22).

2. Appareil de mesure de distance selon la revendication 1, **caractérisé en ce que** l'unité de traitement (30) est conçue pour fonctionner sans accord, dans lequel un circuit de filtrage du dispositif de filtrage, sur la base de la réponse en fréquence, avec des première et seconde plages de fréquences de résonance, est indépendant d'un accord avec le signal auxiliaire.

3. Appareil de mesure de distance selon la revendication 1 ou 2, **caractérisé en ce que** l'unité de traitement (30) est conçue pour traiter le signal de mesure (22) au moyen d'un signal auxiliaire (38) afin de générer un signal d'évaluation (32).

4. Appareil de mesure de distance selon l'une quelconque des revendications précédentes, **caractérisé en ce que** l'unité de traitement (30) comprend un dispositif de filtrage (42) qui présente ladite réponse en fréquence (70).

5. Appareil de mesure de distance selon la revendication 4, **caractérisé en ce que** l'unité de traitement (30) est conçue pour traiter le signal de mesure (22) au moyen d'un signal auxiliaire (38) et **en ce que** le dispositif de filtrage (42) sert à filtrer le signal auxiliaire (38).

6. Appareil de mesure de distance selon la revendication 4 ou 5, **caractérisé en ce que** le dispositif de filtrage (42) comprend un circuit de filtrage (62) qui est au moins d'ordre trois.

7. Appareil de mesure de distance selon l'une quelconque des revendications précédentes, **caractérisé en ce que** le signal de mesure (22) est réalisé sous la forme d'un signal de bande.

8. Appareil de mesure de distance selon la revendication 7, **caractérisé en ce que** l'unité de traitement (30) est conçue pour traiter le signal de mesure (22) au moyen d'un signal auxiliaire (38) qui est réalisé sous la forme d'un signal de bande.

9. Appareil de mesure de distance selon l'une quelconque des revendications précédentes, **caractérisé par** un mode d'étalonnage au moins partiellement automatique lors duquel une plage de fréquences de mesure 550, 52) destinée au signal de mesure (22) est adaptée à au moins l'une des plages de fréquences de résonance (76, 78).

10. Appareil de mesure de distance selon la revendication 9, **caractérisé par** une plage d'étalonnage (44) sur laquelle le signal de mesure (22) est fourni en tant que signal d'étalonnage dans le module d'étalonnage à l'unité de traitement (30), par une unité de mesure (46) qui est conçue pour effectuer une mesure de résonance de la plage de fréquences de résonance (76, 78) au moyen du signal d'étalonnage, et par une unité de commande (26) qui est conçue pour adapter la plage de fréquences de mesure (50, 52) à au moins l'une des plages de fréquences de résonance (76, 78) en fonction de la mesure de résonance.
